# EUROPÄISCHE PATENTANMELDUNG

(11) **EP 0 924 283 A1**
(43) Veröffentlichungstag der Anmeldung: **23.06.1999**
(21) Anmeldenummer: 98123665.6
(22) Anmeldetag: 11.12.1998
(51) Int. Cl.: C09K 19/00, C09D 5/36, C09B 67/00, B32B 27/08

(54) **Organisches Material mit metallischem Glanz**

(30) Priorität: 20.12.1997 DE 19756974
(71) Anmelder: Clariant GmbH, 65929 Frankfurt am Main (DE)
(72) Erfinder: Stohr, Andreas Dr., 65830 Kriftel (DE); Schönfeld, Axel Dr., 65207 Wiesbaden (DE)

(57) **Zusammenfassung**

Flächiges Material aus mindestens zwei unvernetzten, thermoplastischen cholesterischen flüssigkristallinen Hauptkettenpolymeren mit unterschiedlicher Ganghöhe ihrer cholesterischen Helices, wobei das Material einen senkrecht von der Oberfläche des Materials ausgehenden Mischungsgradienten der Hauptkettenpolymere und eine Reflexion aller Wellenlängen des sichtbaren Spektrums aufweist.

## Beschreibung

Die Erfindung betrifft Polymere mit einem metallischen Glanz und daraus hergestellte Pigmente, ein Verfahren zu ihrer Herstellung sowie ihre Anwendung.

Cholesterische Flüssigkristallpolymere (cLCPs) sind bekannt. Sie bilden eine helikale Überstruktur aus, die zu einer selektiven und blickwinkelabhängigen Reflexion von Licht führt. Dieser Reflexionseffekt kann ausgenutzt werden, um Effektpigmente herzustellen (DE 195 38 700 A1). Die Effektpigmente zeichnen sich neben einem sehr brillanten Farbeindruck insbesondere dadurch aus, daß sie eine blickwinkelabhängige Farbe aufweisen, d. h. daß zum Beispiel ein mit cholesterischen Pigmenten lackierter Gegenstand bei frontaler Betrachtung grün, bei schrägem Anblick hingegen blau erscheint.

Solche Pigmente, die eine blickwinkelabhängige Farbe aufweisen, sind auch aus einem vernetzten cholesterischen Flüssigkristallpolymer zugänglich (DE 42 40 743 A1).

Es ist weiterhin bekannt, daß Cholesterische Flüssigkristallpolymere als Polarisationseinrichtung verwendet werden können (R. Maurer et al., SID 90 Digest of Technical Papers, Las Vegas 1990, Seite 110 - 113). Hierzu werden drei flüssigkristalline Polymerfilme, deren Reflexionswellenlänge den drei Grundfarben (rot, grün, blau) entsprechen aufeinander gebracht, um über einen großen Teil des sichtbaren Spektrums eine Polarisationsrichtung des einfallenden Lichtes zu reflektieren, so daß nur die Lichtkomponente mit der gegenläufigen Polarisationsrichtung transmittiert wird.

In der EP-A-0 606 940 wird ein dreidimensional vernetzter Flüssigkristallfilm beschrieben, der eine sich kontinuierlich ändernde Verdrillung der cholesterischen Helix aufweist, so daß für alle Wellenlängen des sichtbaren Spektrums eine Reflexion einer Polarisationsrichtung stattfindet und nur die gegenläufige Komponente transmittiert wird. Die sich kontinuierlich verändernde Verdrillung der Helix wird erreicht, indem während der Vernetzungsreaktion ein Konzentrationsgradient eines nematischen Acrylates in einer cholesterischen Monomermischung durch die Anwesenheit eines UV Farbstoffes aufgebaut wird. In einer weiteren Ausführungsform wird durch das spontane Eindiffundieren nichtflüssigkristalliner polymerisierbarer Verbindungen in ein cholesterisches Polymernetzwerk über Diffusionskontrolle ein Quellungsgradient erzeugt und somit eine sich kontinuierlich ändernde Aufweitung der cholesterischen Helix hervorgerufen. Beide Filmstrukturen werden durch photochemisch induzierte Polymerisation fixiert. Eine mögliche Anwendung als Farbmittel wird nicht erwähnt.

In der WO 97/16762 wird ebenfalls eine sich kontinuierlich ändernde Verdrillung der cholesterischen Helix durch polymerisationsinduzierte Diffusion niedermolekularer Verbindungen von einem cholesterischen Material während einer photochemischen Polymerisation erzeugt. Die hervorgerufene Änderung der Helix über die Schichtdicke ist hier nicht linear, sondern exponentiell. Dadurch wird es möglich, die Bandbreite des Polarisators bei gleicher Schichtdicke zu erhöhen. Weiterhin wird erwähnt, daß bei niedrigen Konzentrationen (z.B. 1/6) von nicht polymerisierbarem flüssigkristallinen Material in dem polymerisierbaren cholesterischen flüssigkristallinen Material die resultierende Bandbreite sehr stark erniedrigt wird. Erst bei höheren Konzentrationen (z. B. 1/2) erhält man die gewünschten Bandbreiten. Ein solches Material, in dem in einem cholesterischen Netzwerk hohe Mengen einer nicht einpolymerisierbaren, d.h. nicht kovalent an das entstehende Polymernetzwerk gebundenen, Verbindung vorliegen, ist nicht für eine Anwendung als Farbpigment geeignet. Bei Einwirken des Bindemittels, welches in der Regel organische Lösungsmittel enthält kommt es zu einem Quellen des Polymernetzwerkes und zu einem Auswaschen der nicht kovalent gebundenen Bestandteile. Es ist bekannt, daß es in einem cholesterischen Polymernetzwerk nach Entfernen dieser Bestandteile zu einem Volumenschrumpf kommt (siehe auch A. Stohr, P. Strohriegl, J. Macromol. Sci. - Pure Appl. Chem., A34(7), 1125, (1997); R.A.M. Hikmet, B.H. Zwerver, Liquid Crystals 13, 561 (1993)). Als Folge davon sinkt die Helixganghöhe und die Reflexionsbande verschiebt sich zu niedrigeren Reflexionswellenlängen. Folglich werden nicht alle Wellenlängen des sichtbaren Lichtes reflektiert und das Material erscheint farbig. Diese Eigenschaft weist auch das Material aus WO 97/16762 auf und macht es somit für eine Pigmentanwendung mit metallischem Glanz uninteressant.

Aufgabe der vorliegenden Erfindung ist es, organische Materialien mit einem metallischen Glanz unter Vermeidung der vorstehend beschriebenen Nachteile, ein einfaches Verfahren zu ihrer Herstellung sowie Möglichkeiten ihrer Anwendung zur Verfügung zu stellen.

Es wurde gefunden, daß sich die im Stand der Technik aufgeführten Nachteile durch Verwendung von thermoplastischen cholesterischen flüssigkristallinen Hauptkettenpolymeren umgehen lassen, wobei auf einfache Weise temperaturstabile, chemikalienresistente und lösungsmittelbeständige Effektpigmente mit metallischem Glanz bereitgestellt werden können.

Gegenstand der vorliegenden Erfindung ist daher ein flächiges Material aus mindestens zwei unvernetzten, thermoplastischen cholesterischen flüssigkristallinen Hauptkettenpolymeren mit unterschiedlicher Ganghöhe ihrer cholesterischen Helices, oder aus mindestens einem unvernetzten, thermoplastischen cholesterischen flüssigkristallinen Hauptkettenpolymer und einem thermoplastischen, nematischen Polymer, wobei das Material einen senkrecht von der Oberfläche des Materials ausgehenden Mischungsgradienten der Hauptkettenpolymere und eine Reflexion aller Wellenlängen des sichtbaren Spektrums aufweist.

Unter "flächigem Material" wird vorzugsweise eine Schicht auf einem Trägermaterial, ein Film oder ein Plättchen verstanden.

Gegenstand der Erfindung ist auch ein Verfahren zur Herstellung des besagten flächigen Materials, dadurch gekennzeichnet, daß mindestens zwei thermoplastische cholesterische flüssigkristalline Hauptkettenpolymere mit unterschiedlicher Ganghöhe ihrer cholesterischen Helix, oder mindestens ein thermoplastisches cholerisches Polymer und ein thermoplastisches, nematisches Polymer, auf einem Trägersubstrat übereinandergeschichtet und anschließend getempert werden, bis ein metallischer Effekt sichtbar wird und der entstandene Polymerfilm gegebenenfalls von dem Trägersubstrat getrennt und ggf. zu Plättchen verarbeitet wird.

Um den erfindungsgemäßen Effekt zu erreichen, ist es notwendig, daß die übereinander zu schichtenden cholesterischen Flüssigkristallpolymere unterschiedliche Ganghöhen (Pitch) der cholesterischen Helix besitzen. Dadurch wird es möglich, daß Polymermoleküle der einzelnen Schichten während des Temperprozesses in die jeweils angrenzenden Schichten diffundieren und sich aufgrund der vorgegebenen unterschiedlichen Ganghöhen eine über die gesamte Schichtdicke kontinuierlich ändernde Helixganghöhe ausbildet. Bei Verwendung von mehr als zwei Polymeren mit jeweils diskreten Helixganghöhen ist darauf zu achten, daß die Polymere so übereinander geschichtet werden, daß sich die Helixganghöhe innerhalb des gesamten Verbundes von Polymerschicht zu Polymerschicht entweder erhöht oder erniedrigt. Die Anzahl der übereinander geschichteten Flüssigkristallpolymere kann beliebig sein, zweckmäßig sind jedoch 2 bis 7, vorzugsweise 2 bis 5.

Die sich nach dem Temperprozeß kontinuierlich ändernde Helixganghöhe kann dabei nur Werte zwischen den Ganghöhen der untersten und obersten cholesterischen Flüssigkristallpolymerschicht annehmen.

Um einen metallischen Glanz des Materials herbeizuführen, ist es notwendig, daß alle Wellenlängen des sichtbaren Spektrums reflektiert werden. Deshalb werden in der Regel an der einen Außenseite, d.h. Oberseite oder Unterseite, des erfindungsgemäßen Materials cholesterische Flüssigkristallpolymere mit selektiver Reflexion im roten oder IR-Spektralbereich und an der anderen Außenseite, d.h. Unterseite oder Oberseite, solche mit selektiver Reflexion im blauen oder UV-Spektralbereich angeordnet. Anstelle der rot- oder IR-reflektierenden Schicht kann auch eine nematische, d.h. unverdrillte, Polymerschicht, insbesondere aus Hauptkettenpolymeren, verwendet werden.

Als nematische Hauptkettenpolymere (LCP) können alle dem Fachmann bekannten LCPs eingesetzt werden, wie sie in 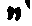 G. W. Becker, D. Braun: Kunststoff-Handbuch Band 3/3, Seite 219 - 258, Carl Hanser Verlag, München 1994" aufgeführt sind. Bevorzugte LCPs sind solche, die Monomere aus der Gruppe der aromatischen Hydroxycarbonsäuren, und/oder der aromatischen Dicarbonsäuren und aromatischen Diole enthalten.

Bei diesen Gruppen können aromatische Hydroxycarbonsäuren durch cycloaliphatische Hydroxycarbonsäuren oder aromatische Aminocarbonsäuren, aromatische Dicarbonsäuren durch cycloaliphatische Dicarbonsäuren, sowie aromatische Diole durch aromatische Diamine, Aminophenole und/oder cycloaliphatische Diole ersetzt werden.

Bei den stöchiometrischen Verhältnissen der genannten Monomere untereinander ist darauf zu achten, daß die dem Fachmann bekannte Stöchiometrie der funktionellen Gruppen zur Polykondensation unter Ausbildung von Ester- und/oder Amidbindungen gewährleistet ist.
Zusätzlich können die Polymere noch Komponenten mit mehr als zwei funktionellen Gruppen, wie beispielsweise Dihydroxybenzoesäuren, Trihydroxybenzole oder Trimellitsäure, enthalten. Diese Komponenten wirken als Verzweigungsstelle im Polymer und dürfen nur in geringen Konzentrationen, beispielsweise 0 bis 5 Mol %, zugegeben werden, um eine Vernetzung des Materials zu vermeiden. Besonders bevorzugt als LCPs sind nematische Hauptkettenpolymere, die aus folgenden Bausteinen der einzelnen Monomergruppen aufgebaut sind:

### Aromatische Hydroxycarbonsäuren, Aminocarbonsäuren:

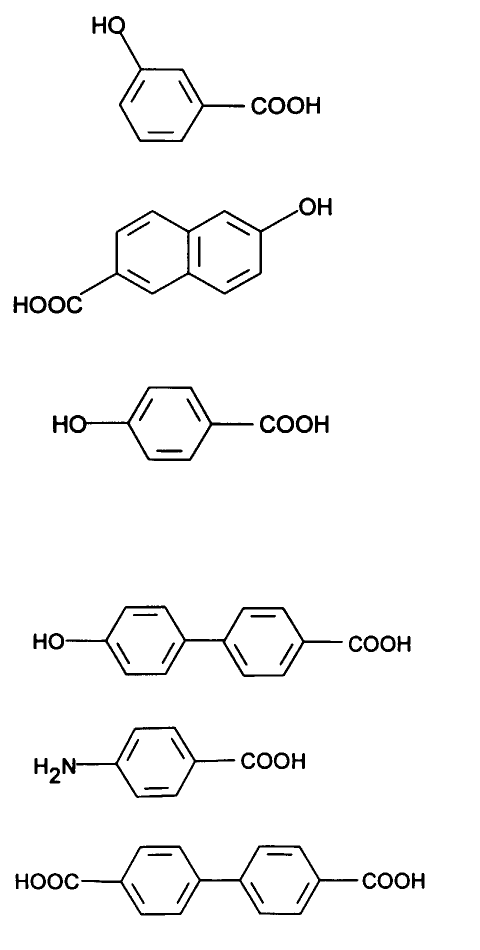

### Aromatische Dicarbonsäuren, aliphatische Dicarbonsäuren:

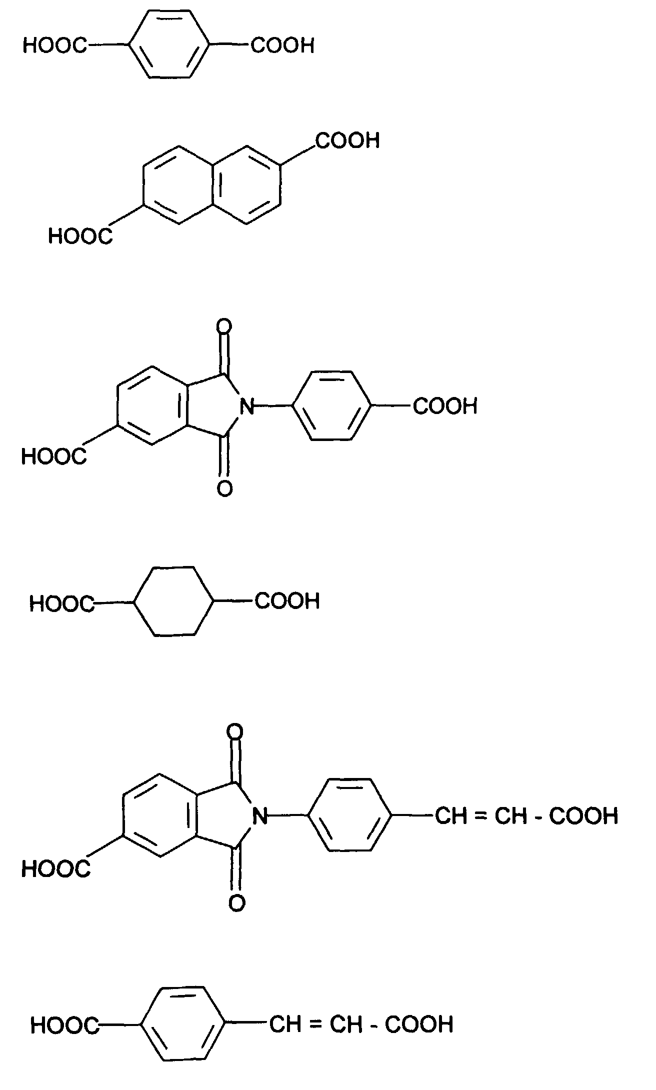

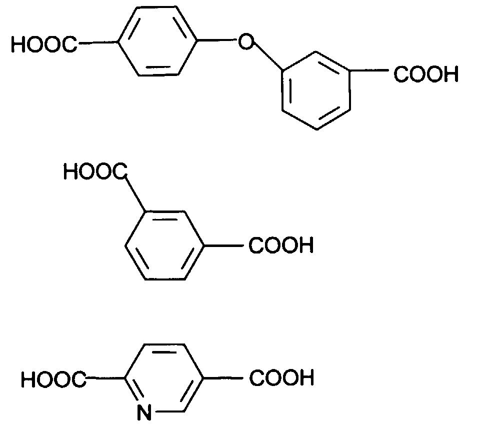

### Aromatische Diole, Aminophenole, aromatische Diamine:

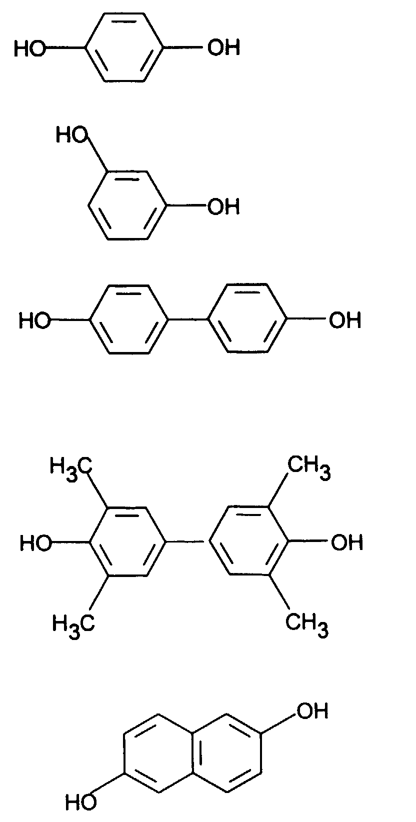

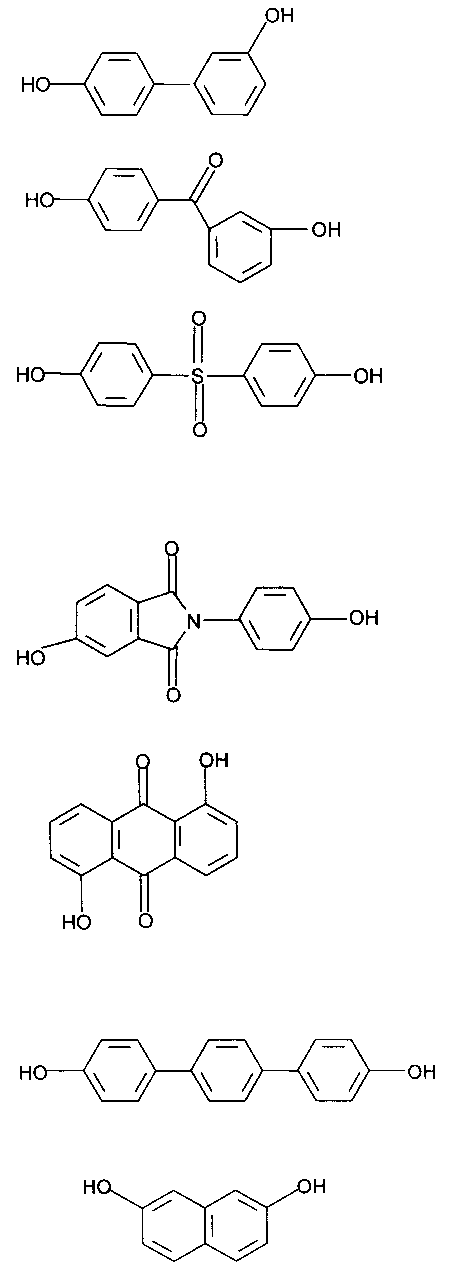

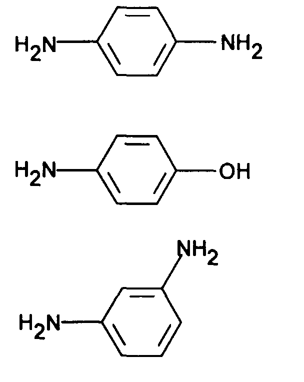

Ganz besonders bevorzugt als LCP sind Verbindungen, die als aromatische Hydroxycarbonsäure p-Hydroxybenzoesäure und/oder 2-Hydroxy-6-naphthoesäure, als aromatische Dicarbonsäure 2,6-Naphthalindicarbonsäure, Terephthalsäure und/oder Isophthalsäure und als aromatisches Diol Hydrochinon, Resorcin und/oder 4,4 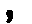 -Dihydroxybiphenyl enthalten.

In einer weiteren Ausführungsform der vorliegenden Erfindung werden an der Ober- bzw. Unterseite cholesterische Flüssigkristallpolymere verwendet, von denen mindestens eines eine Reflexionsfarbe im sichtbaren Spektralbereich besitzt. Dadurch lassen sich metallische Effekte mit z.B. einem Blaustich oder Rotstich erzeugen. Der senkrecht von der Oberfläche des erfindungsgemäßen Materials ausgehende Mischungsgradient ist vorzugsweise linear, jedoch ist auch ein exponentieller Gradient möglich. Der sich einstellende Mischungsgradient korreliert mit dem sich in gleicher Weise kontinuierlich ändernden Pitch, d.h. der Mischungsgradient entspricht einem Pitchgradienten. Der jeweilige Pitch wiederum entspricht der jeweiligen Wellenlänge des reflektierten Lichts und kann insbesondere durch die Auswahl und/oder die Konzentration einer verdrillend wirkenden chiralen Komponente in dem Hauptkettenpolymer eingestellt werden.

Cholesterische flüssigkristalline Hauptkettenpolymere werden im allgemeinen aus einer chiralen Komponente sowie aus Hydroxycarbonsäuren und/oder einer Kombination aus Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie beispielsweise Cyclohexandicarbonsäure, einzusetzen.

Die erfindungsgemäß eingesetzten Hauptkettenpolymere sind vorzugsweise flüssigkristalline Polyester, Polyamide oder Polyesteramide, die aromatische und/oder cycloaliphatische Hydroxycarbonsäuren, aromatische Aminocarbonsäuren; aromatische und/oder cycloaliphatische Dicarbonsäuren, und aromatische und/oder cycloaliphatische Diole und/oder Diamine; sowie chirale, bifunktionelle Comonomere enthalten.

Bevorzugte cholesterische Polymere im Sinne der vorliegenden Erfindung sind cholesterische flüssigkristalline Hauptkettenpolymere, bestehend im wesentlichen aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Mol% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine;
d) 0,1 bis 40 Mol%, vorzugsweise 1 bis 25 Mol%, an chiralen, bifunktionellen Comonomeren; wobei die Gesamtsumme 100 Mol% und die Summe der Komponenten a), b) und c) 60 bis 99,9 Mol% ergibt.

Bei den angegebenen Prozentsätzen ist darauf zu achten, daß die dem Fachmann bekannte Stöchiometrie der funktionellen Gruppen zur Polykondensation gewährleistet ist. Zusätzlich können die Polymere noch Komponenten mit nur einer funktionellen Gruppe oder mit mehr als zwei funktionellen Gruppen, wie beispielsweise Dihydroxybenzoesäure, Trihydroxybenzole oder Trimellitsäure enthalten. Auf diese Weise kann Einfluß auf das Molekulargewicht der Polymeren genommen werden. Die Komponenten mit mehr als zwei funktionellen Gruppen wirken als Verzweigungsstelle im Polymer und dürfen nur in geringen Konzentrationen, beispielsweise 0 bis 5 Mol%, zugegeben werden, wenn eine Vernetzung des Materials während der Kondensation vermieden werden soll.

Besonders bevorzugt sind cholesterische Hauptkettenpolymere, die aus folgenden Bausteinen der einzelnen Monomergruppen aufgebaut sind:
a) Aromatische Hydroxycarbonsäuren, Aminocarbonsäuren:
   Hydroxybenzoesäuren, Hydroxynaphthalincarbonsäuren, Hydroxybiphenylcarbonsäuren, Aminobenzoesäuren, Hydroxyzimtsäuren;
b) Aromatische Dicarbonsäuren, aliphatische Dicarbonsäuren:
   Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren sowie
c) Aromatische Diole, Aminophenole, Diamine:
   Hydrochinone, Dihydroxybiphenyle, Tetramethyldihydroxybiphenyle, Naphthalindiole, Dihydroxydiphenylsulfone, Dihydroxydiphenylether, Dihydroxyterphenyle, Dihydroxydiphenylketone, Phenylendiamine, Diaminoanthrachinone, Dihydroxyanthrachinone sowie
d) Chirale, bifunktionelle Monomere:
   Isosorbid, Isomannid, Isoidid, Camphersäure, (D)- oder (L)- Methylpiperazin, (D)- oder (L)- 3-Methyladipinsäure, Butan-2,3-diol sowie 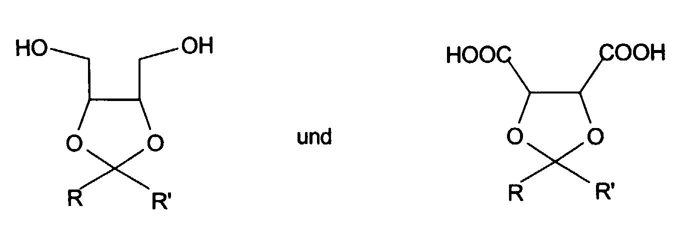 wobei R und R 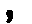 jeweils unabhängig voneinander H, C₁-C₆-Alkyl oder Phenyl, vorzugsweise H oder CH₃, sind.

Je höher der Anteil der verdrillend wirkenden chiralen Komponente d) ist, desto stärker ist die Verdrillung und desto kleiner ist der Pitch und, infolgedessen, desto kürzer ist die Wellenlänge des reflektierten Lichts.

Bei der Verwendung von Sulfonsäuregruppen als funktionelle Gruppe zur Kondensation kann es vorteilhaft sein, diese in einer aktivierten Form einzusetzen, zum Beispiel als Sulfochlorid oder als Sulfonsäureester.

Anstelle der aufgeführten Substanzen können auch andere Strukturisomere oder Derivate von diesen eingesetzt werden. So ist es beispielsweise möglich, anstelle von N-(4-Hydroxyphenyl)-trimellitimid auch Aminophenol und Trimellitsäureanhydrid einzusetzen.

Die beschriebenen Polymerbausteine können noch weitere Substituenten, wie beispielsweise Methyl, Methoxy, Cyano oder Halogen, enthalten.

Ganz besonders bevorzugt im Sinne der vorliegenden Erfindung sind Hauptkettenpolymere, enthaltend ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl sowie Camphersäure, Isosorbid, Isomannid als chirale Komponente.

Die Polykondensation kann nach allen üblichen Methoden durchgeführt werden. Beispielsweise eignet sich die Schmelzkondensation mit Acetanhydrid, die beispielsweise in EP-A-0 391 368 beschrieben ist. Die Kondensation mit Acetanhydrid ist auch in Lösung oder in disperser oder emulgierter Phase möglich.

Bevorzugt erfolgt die Verknüpfung der Monomere über Esterbindungen (Polyester), Amidbindungen (Polyesteramid/Polyamid) und/oder über Imidbindungen (Polyesterimid/Polyimid), jedoch kann die Verknüpfung auch über andere bekannte Verknüpfungsarten erfolgen.

Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden molaren Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein. Es können jedoch auch gezielte Überschüsse an funktionellen Gruppen, beispielsweise mehr Carboxygruppen als Hydroxygruppen, eingesetzt werden, um so beispielsweise das erzielbare Molekulargewicht zu steuern.

Anstelle der Carbonsäuren können auch Carbonsäurederivate, wie beispielsweise Säurechloride oder Carbonsäureester, eingesetzt werden. Anstelle der Hydroxykomponenten können auch entsprechende Hydroxyderivate, wie beispielsweise die acetylierten Hydroxyverbindungen, eingesetzt werden.

Um die erfindungsgemäßen flächigen Materialien zu stabilisieren, können die cholesterischen flüssigkristallinen Polymere auch vernetzbare Gruppen enthalten, so daß es möglich ist, ein orientiertes Flüssigkristallpolymer durch beispielsweise eine Photovernetzung, die vorzugsweise nach einer Extrusion stattfindet, zu fixieren.

In einer bevorzugten Ausführungsform weisen die cLCPs eine sehr geringe Löslichkeit auf, so daß ihre Molekulargewichte nicht mit kommerziell üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Besonders geeignet sind Polymere mit einer intrinsischen Viskosität zwischen 0,1 dl/g und 10 dl/g, gemessen bei einer Temperatur von 25°C.

Die vorstehend beschriebenen cholesterischen Flüssigkristallpolymere können direkt im Sinne der Erfindung eingesetzt werden. Es ist jedoch auch möglich, Blends aus den cholesterischen flüssigkristallinen Polymeren einzusetzen. Die Blends können entweder aus verschiedenen cholesterischen flüssigkristallinen Polymeren bestehen, es ist jedoch auch möglich, die cholesterischen flüssigkristallinen Polymere mit nematischen Polymeren zu mischen.

In den flüssigkristallinen Polymeren können 0 bis 10 Gew.-%, vorzugsweise 0 bis 5 Gew.-%, bezogen auf das Gesamtgewicht, an üblichen Hilfsstoffen und Additiven aus der Gruppe der Verlaufadditive (z.B. Polyacrylate, Polyester, wie sie in Pulverlacksystemen verwendet werden), Stabilisatoren (z.B. UV- oder Wärmestabilisatoren, Antioxidantien), Antistatika und optischen Aufheller enthalten sein.
Hilfsstoffe und/oder Additive werden mit dem cholesterischen Flüssigkristallpolymer vermischt, bis eine homogene Verteilung vorliegt. Die Vermischung erfolgt am günstigsten in der Schmelze des cholesterischen Flüssigkristallpolymeren. Das Vermischen kann mit allen dafür geeigneten Mischaggregaten, wie beispielsweise Dispersionsknetern, ®Banbury-Knetern oder Schneckenknetern, oder durch Extrusion, beispielsweise in einem Ein- oder Zweischneckenkneter, erfolgen. Insbesondere bei der Extrusion kann auch von einer pulverförmigen Mischung der Zusatzstoffe mit dem cholesterischen flüssigkristallinen Polymer ausgegangen werden.

Das erfindungsgemäße flächige Material mit metallischem Glanz kann hergestellt werden, indem mindestens zwei cholesterische Flüssigkristallpolymere mit unterschiedlicher Ganghöhe ihrer cholesterischen Helix auf einem Trägersubstrat übereinandergeschichtet und getempert werden, anschließend ggf. der flüssigkristalline Polymerfilm von dem Trägersubstrat getrennt und ggf. der flüssigkristalline Polymerfilm in die für Effektpigmente geeignete Plättchengröße und -form gebracht wird.

In einem Lösungsmittel gelöste cholesterische Flüssigkristallpolymere können beispielsweise auf einem planaren Untergrund, z. B. eine Folie, Glasscheibe, Papier, oder hochtemperaturstabile Kunststoffolie oder -band oder Metallfolie oder -band, nacheinander aufgerakelt werden, wobei nach dem Trocknen der ersten Schicht die zweite Schicht und, gegebenenfalls nach deren Trocknen, die dritte und ggf. noch weitere Schichten aufgebracht werden. Als Auftrageverfahren können neben dem Rakeln auch Sprühen oder Walzen angewendet werden. Beim Auftragen der einzelnen Polymerschichten ist darauf zu achten, daß die erhaltene Gesamtschichtdicke im Bereich von 1 - 100 µm, bevorzugt zwischen 1 und 25 µm, insbesondere zwischen 3 und 15 µm liegt. Dazu muß je nach Anzahl der übereinanderzulegenden Polymerschichten die Schichtdicke der einzelnen Schichten abgestimmt werden.
Nach dem Trocknen der letzten Schicht wird der Polymerfilm auf die Orientierungstemperatur erhitzt, damit sich die Helices möglichst alle senkrecht zur Substratoberfläche angeordnen. Bei der Orientierungstemperatur ist die Beweglichkeit der Makromoleküle so hoch, daß es auch zu einem Diffusionsvorgang von Makromolekülen einer einzelnen Polymerschicht zu der darunter- und darüberliegenden Schicht kommt. Bei geeigneter Temperzeit führt dies zur Ausbildung einer sich über die Gesamtschicht kontinuierlich ändernden Helixganghöhe.

Dabei ist darauf zu achten, daß die Temperzeit genau eingehalten wird. Das Tempern sollte abgebrochen werden, sobald sich der metallische Effekt eingestellt hat. Eine zu lange Temperzeit hätte zur Folge, daß eine zu starke Diffusion der Makromoleküle stattfindet und sich eine über die Gesamtschicht einheitliche Ganghöhe ausbildet. Dies hätte zur Folge, daß nicht eine Breitbandreflexion, sondern eine Selektivreflexion von Licht mit der der vorliegenden Durchschnitts-Ganghöhe entsprechenden Wellenlänge auftritt und der metallische Effekt verschwindet. Die Temperzeit beträgt in der Regel 0,1 s bis 10 min, vorzugsweise 1 s bis 5 min, insbesondere 3s bis 2 min. Das Tempern wird in der Regel bei einer Temperatur zwischen 100 und 400°C, vorzugsweise zwischen 150 und 300°C, insbesondere zwischen 180 und 250°C, durchgeführt.

In einer besonderen Ausführungsform werden organische oder wäßrige Dispersionen der flüssigkristallinen Polymere zur Herstellung der einzelnen Polymerschichten verwendet.

Besonders bevorzugt zur Herstellung der erfindungsgemäßen metallisch erscheinenden Polymermaterialien ist ein Verfahren, bei dem der metallische Effekt durch Verwendung zweier nicht im sichtbaren Spektralbereich reflektierenden cholesterischen Flüssigkristallpolymere hervorgerufen wird. Dabei besitzt ein cholesterisches Flüssigkristallpolymer eine Reflexion im IR-Bereich, das andere eine Reflexion im UV-Bereich. Dabei ist wegen des großen Gangunterschiedes der Helices der beiden cholesterischen Flüssigkristallpolymere eine längere Temperzeit notwendig, um einen kontinuierlichen Gangunterschied hervorzurufen. Dies kann von Vorteil sein, da dadurch das 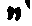 Temperfenster" größer wird und sich der Prozeß leichter kontrollieren läßt. Zur Herstellung des erfindungsgemäßen metallisch erscheinenden Polymers werden jeweils ein im IR- und UV-Bereich reflektierendes cholesterisches Flüssigkristallpolymer wie oben beschrieben übereinander geschichtet und für eine bestimmte Zeit bei der Orientierungstemperatur getempert. Dabei können die IR- und UV-reflektierende Schicht direkt übereinander geschichtet werden.

In einer besonderen Ausführungsform kann dabei auch ein im UV-Bereich reflektierendes cholesterisches Flüssigkristallpolymer mit einem nematischen Flüssigkristallpolymer kombiniert werden. Dies ist möglich, da eine cholesterische Phase aus einer nematischen durch Zugabe chiraler Verbindungen induziert werden kann und nematische und cholesterische Phasen mischbar sind. Man kann die nematische Verbindung auch als Verbindung mit unendlicher Ganghöhe bezeichnen.

In einem bevorzugten Verfahren zur Herstellung des erfindungsgemäßen Materials mit metallischem Glanz werden die cholesterischen Flüssigkristallpolymere bzw. zusätzlich ein nematisches Flüssigkristallpolymer durch Coextrusion übereinandergeführt.
Eventuell wird ein weiteres Polymer als Trägerschicht mit coextrudiert. Anschließend wird das Coextrudat zur Erzeugung des metallischen Effekts wie oben beschrieben getempert.

Die erfindungsgemäßen organischen Materialien mit metallischem Glanz eignen sich aufgrund ihres brillanten metallischen Effekts als Ausgangsmaterial zur Herstellung von Effektpigmenten. Hierzu werden die jeweiligen Flüssigkristallpolymere auf einem temperaturstabilen Trägermaterial, z.B. ein hochtemperaturstabiles Kunststoffband oder -folie oder ein Metallband oder -folie übereinandergeschichtet und getempert, bis sich der metallische Effekt ausbildet. Danach wird die Polymerschicht vom Trägermaterial getrennt und mit einem Zerkleinerungsaggregat auf die gewünschte Plättchengröße zerkleinert. Es ist darauf zu achten, daß noch immer eine plättchenförmige Geometrie vorhanden ist, d. h. es sollte ein Plättchendurchmesser vorhanden sein, der mindestens zwei- bis dreimal so groß wie die Plättchendicke ist. So sollte die Plättchendicke im Bereich von 1 - 100 µm, bevorzugt zwischen 1 und 25 µm, insbesondere zwischen 3 und 15 µm liegen. Der Plättchendurchmesser liegt im Bereich von 10 - 250 µm, bevorzugt zwischen 20 und 90 µm.

Lacke, die die erfindungsgemäßen Effektpigmente enthalten, können für die Lackierung von natürlichen und synthetischen Materialien, beispielsweise Holz, Metall oder Glas, insbesondere zur Lackierung von Karosserien oder von Karosserieteilen von Kraftfahrzeugen, verwendet werden.

Für Lackierungen sind dunkle Untergründe besonders bevorzugt. Unter Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz.
Außerdem ist eine Anwendung der Effektpigmente im kosmetischen Bereich möglich.

Es ist auch möglich, das erfindungsgemäße Material zu Polymerlaminaten zu verarbeiten, d.h. zu flächigen Gebilden, bei denen zwei oder mehrere erfindungsgemäße Materialschichten durch eine oder mehrere dazwischenliegende lichtabsorbierende Schichten getrennt sind.

Um ein deckendes Pigment zu erzeugen, ist es notwendig, daß die lichtabsorbierende Schicht die Mittelschicht eines (mindestens) dreilagigen Aufbaus ausbildet. Diese Mittelschicht ist von beiden Seiten von je einer Schicht des erfindungsgemäßen Materials mit metallischem Glanz überzogen. Ein solches Laminat erscheint aufgrund der absorbierenden Mittelschicht von beiden Seiten deckend. Es ist prinzipiell auch möglich, daß das Laminat mehr als nur zwei transparente Schichten des Materials mit metallischem Glanz enthält. Weiterhin kann es vorteilhaft sein, das Laminat von einer oder beiden Seiten mit einer transparenten Klarlackschicht zu versehen, die nicht flüssigkristallin zu sein braucht.

Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und Pulverlacke eingesetzt werden. In manchen Fällen kann es zweckmäßig sein, die Klarlackschicht etwas dicker zu wählen oder zwei Klarlackschichten aus gleichen oder verschiedenen Flüssigklarlacken oder Pulverlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Die Gesamtschichtdicke des erfindungsgemäßen Laminats liegt im Bereich von 1 µm bis 100 µm, bevorzugt zwischen 2 µm und 50 µm und insbesondere zwischen 3 µm und 15 µm. Je nach gewünschter Anwendung können aber auch hiervon abweichende Schichtdicken zweckmäßig sein. Es ist vorteilhaft, wenn die transparenten Schichten mit metallischem Glanz eine vergleichbare Schichtdicke aufweisen. Die Plättchendurchmesser liegen im Bereich von 10 bis 250 µm, bevorzugt zwischen 20 und 90 µm.

Die absorbierende Zwischenschicht eines Polymerlaminats muß nicht notwendigerweise aus einem Polymer bestehen und braucht auch kein Flüssigkristall zu sein oder zu enthalten. Beispielsweise ist es möglich, daß die Zwischenschicht aus einem Farbmittel, Ruß, plättchenförmigen Graphitpartikeln oder aus einem eingefärbten Polymer besteht. Der Gehalt an dem die absorbierende Zwischenschicht ausbildenden Stoff im Polymerlaminat beträgt zweckmäßig 1 bis 95 Gew.-%, vorzugsweise 3 bis 90 Gew.-%.

Die Farbe des Laminats kann auch dadurch beeinflußt werden, daß als absorbierende Zwischenschicht anstelle von schwarz ein anderer Farbton, beispielsweise blau, rot oder grün gewählt wird.

Es ist darauf zu achten, daß eine gute Adhäsion der absorbierenden Zwischenschicht zu den benachbarten Flüssigkristallpolymerschichten gewährleistet ist, um ein Auseinanderbrechen zu vermeiden. Bei einer unzureichenden Adhäsion kann die zusätzliche Einfügung von Zwischenschichten mit hoher Adhäsion zweckmäßig sein, z. B. durch eine Polyvinylacetatschicht oder andere dem Fachmann bekannte Adhäsionspolymere.

Ein Verfahren zur Herstellung des Laminates wird im folgenden beschrieben. Jeweils zwei Schichten des erfindungsgemäßen Materials mit metallischem Glanz, hergestellt wie oben beschrieben, mit einer maximalen Schichtdicke von 10 µm, werden mit einer lichtabsorbierenden Schicht verklebt. Diese lichtabsorbierende Schicht ist z.B. ein polymeres Klebematerial, in das lichtabsorbierende Teilchen eingearbeitet wurden.

In einer weiteren Ausführungsform ist das Trägermaterial zur Herstellung des erfindungsgemäßen Materials mit metallischem Glanz selbst die lichtabsorbierende Schicht. Durch beidseitiges Beschichten kann ebenfalls ein Laminat erzeugt werden.

Besonders bevorzugt zur Herstellung des Laminats ist ein Verfahren, bei dem thermoplastische cholesterische Flüssigkristallpolymere in mindestens vier Polymerschichten und einer zwischen der zweiten und dritten Schicht liegenden lichtabsorbierenden Schicht durch Coextrusion extrudiert werden. Dabei ist ein symmetrischer Schichtaufbau bevorzugt, wie z.B. ABCBA, wobei
- A: ein cholesterisches Hauptkettenpolymer mit einer Reflexion im UV-Bereich,
- B: ein cholesterisches Hauptkettenpolymer mit einer Reflexion im IR-Bereich und
- C: die lichtabsorbierende Schicht
bedeuten.
Eventuell wird ein weiteres Polymer als Trägerschicht mit coextrudiert.

In einer weiteren bevorzugten Ausführungsform werden mehrere cholesterische flüssigkristalline Haupkettenpolymere mit sich verändernder cholesterischer Ganghöhe, wie oben zur Erzielung eines Materials mit metallischem Glanz aus Lösung oder aus Dispersion beschrieben, übereinandergeschichtet. Anschließend wird auf die letzte Schicht die lichtabsorbierende Schicht aufgebracht und auf diese wiederum die cholesterischen flüssigkristallinen Hauptkettenpolymere in umgekehrter Reihenfolge, wobei nach dem Trocknen der ersten Schicht die zweite Schicht und, gegebenenfalls nach deren Trocknen, die dritte und sofort noch weitere Schichten aufgebracht werden. Zur Ausbildung der für den metallischen Glanz notwendigen kontinuierlichen Änderung der cholesterischen Ganghöhe auf beiden Seiten der lichtabsorbierenden Schicht wird dieser Verbund für eine gewisse Zeit bei erhöhter Temperatur getempert.

Die erfindungsgemäßen deckenden Laminate aus organischen Materialien mit metallischem Glanz eignen sich aufgrund ihres brillanten metallischen Effekts als Ausgangsmaterial zur Herstellung von Effektpigmenten. Nach der Herstellung werden die Laminate mit herkömmlichen Zerkleinerungsaggregaten auf die gewünschte Plättchengröße zerkleinert. Es ist darauf zu achten, daß noch immer eine plättchenförmige Geometrie vorhanden ist, d. h. es sollte ein Plättchendurchmesser vorhanden sein, der mindestens zwei- bis dreimal so groß wie die Plättchendicke ist. So sollte die Plättchendicke im Bereich von 1 - 100 µm, bevorzugt zwischen 1 und 25 µm, insbesondere zwischen 3 und 15 µm liegen. Der Plättchendurchmesser liegt im Bereich von 10 - 250 µm, bevorzugt zwischen 20 und 90 µm.

Lacke, die die erfindungsgemäßen Effektpigmente enthalten, können für die Lackierung von natürlichen und synthetischen Materialien, beispielsweise Holz, Metall oder Glas, insbesondere der Karosserie oder von Karosserieteilen von Kraftfahrzeugen, verwendet werden. Außerdem ist eine Anwendung solcher Effektpigmente im kosmetischen Bereich denkbar.

Gegenstand der Erfindung ist daher auch die Verwendung des flächigen Materials mit metallischem Effekt als Effektpigment, sowie als Farbmittel in elektrophotographischen Tonern und Entwicklern, in triboelektrisch zu versprühenden Pulverlacken sowie für Farbfilter.

### Beispiel A

30 Mol 2-Hydroxy-6-naphthoesäure, 50 Mol 4-Hydroxy-benzoesäure, 10 Mol Terephthalsäure, 3,5 Mol 4,4 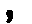 Dihydroxybiphenyl und 5,5 Mol 1,4:3,6-Dianhydro-D-sorbit (Isosorbid) werden in einem Reaktor mit 103 Mol Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere
30 Minuten unter Vakuum (ca. 5 mbar) gerührt. Danach wird mit Stickstoff belüftet und das Polymer mit einem Extruder ausgetragen und pelletiert.
Das Polymer hat eine brillante, kupferne Farbe, die bei schrägem Anblick rot erscheint. Die Farbe tritt schon während der Kondensation im Vakuum auf und bleibt nach dem Abkühlen erhalten.

### Beispiel B

Unter sonst gleichen Synthesebedingungen erhält man durch Erhöhung des Isosorbidanteils auf 6% ein Polymer mit goldener Farbe, die bei schrägem Anblick blaustichig grün erscheint.

### Beispiel C

Unter sonst gleichen Synthesebedingungen erhält man durch Erhöhung des Isosorbidanteils auf 6,5% ein Polymer mit gelbstichig grüner Farbe, die bei schrägem Anblick grünstichig blau erscheint.

### Beispiel D

Unter sonst gleichen Synthesebedingungen erhält man durch Erhöhung des Isosorbidanteils auf 7% ein Polymer mit blaustichig grüner Farbe, die bei schrägem Anblick blau erscheint.

### Beispiel E

Unter sonst gleichen Synthesebedingungen erhält man durch Erhöhung des Isosorbidanteils auf 7,5% ein Polymer mit blauer Farbe, die bei schrägem Anblick grünstichig violett erscheint.

### Beispiel F

Unter sonst gleichen Synthesebedingungen erhält man durch Erhöhung des Isosorbidanteils auf 8,5% ein Polymer mit einer Reflexionswellenlänge im UV-Bereich.

### Beispiel G

Unter sonst gleichen Synthesebedingungen erhält man durch Verwendung eines Isosorbidanteils von 5% ein Polymer mit Reflexionswellenlänge im IR-Bereich.

### Beispiel H

5 Mol 2-Hydroxy-6-naphthoesäure, 50 Mol 4-Hydroxy-benzoesäure, 15 Mol 4,4 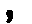 Dihydroxybiphenyl und 10 Mol Camphersäure werden in einem Reaktor mit 103 Mol Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum
(ca. 5 mbar) gerührt. Danach wird mit Stickstoff belüftet und das Polymer mit einem Extruder ausgetragen und pelletiert.
Das Polymer zeigt eine Reflexion im IR-Bereich.

### Beispiel I

15 Mol 2-Hydroxy-6-naphthoesäure, 40 Mol 4-Hydroxy-benzoesäure, 20 Mol 4,4 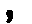 Dihydroxybiphenyl und 25 Mol Camphersäure werden in einem Reaktor mit 103 Mol Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum
(ca. 5 mbar) gerührt. Danach wird mit Stickstoff belüftet und das Polymer mit einem Extruder ausgetragen und pelletiert.
Das Polymer zeigt eine Reflexion im UV-Bereich.

### Beispiel 1

Auf eine Polyimidfolie werden jeweils 10 gew-%ige Dispersionen der Polymere aus Beispiel A - E in Isobutanol mit einem 24 µm Handcoater in der Reihenfolge A - E übereinander geschichtet. Dabei wird jede einzelne Polymerschicht nach dem Aufrakeln getrocknet und der Pulverauftrag durch Ziehen der Folie über eine 200°C heiße Oberfläche fixiert. Nachdem das letzte Polymer fixiert wurde, wird die Folie für eine Minute bei 220°C in einem Umlufttrockenschrank getempert. Nach dem Tempern zeigt der Polymerfilm einen silbrig grauen metallischen Effekt. Die Gesamtschichtdicke beträgt 11 µm.

### Beispiel 2

Auf je eine Polyimidfolie werden jeweils 20 gew-%ige Dispersionen der Polymere aus Beispiel F - G in Isobutanol mit einem 24 µm Handcoater aufgezogen, getrocknet und durch Ziehen über eine heiße Oberfläche bei 200°C fixiert. Die beiden Folien werden dann so übereinandergelegt, daß die beiden cholesterischen Flüssigkristallpolymere Kontakt zueinander haben. Anschließend werden die Polymere in einer Schmelzenpresse bei 300°C und 100 bar für 3 Sekunden aufeinander gepreßt.
Nach dem Pressen zeigt der Polymerfilm einen silbrig grauen metallischen Effekt. Die Gesamtschichtdicke beträgt 10 µm.

### Beispiel 3

Auf je eine Polyimidfolie werden jeweils 20 gew-%ige Dispersionen des Polymers aus Beispiel F und eines kommerziell erhältlichen nematischen Flüssigkristallpolymers, beispielsweise Vectra^{®} A950, in Isobutanol mit einem 24 µm Handcoater aufgezogen, getrocknet und durch Ziehen über eine heiße Oberfläche bei 200°C fixiert. Die beiden Folien werden dann so übereinandergelegt, daß das cholesterische Flüssigkristallpolymer aus Beispiel F und das nematische Flüssigkristallpolymer Kontakt zueinander haben. Anschließend werden die Polymere in einer Schmelzenpresse bei 300°C und 100 bar für 3 Sekunden aufeinander gepreßt.
Nach dem Pressen zeigt der Polymerfilm einen silbrig grauen metallischen Effekt. Die Gesamtschichtdicke beträgt 12 µm.

### Beispiel 4

Auf eine Aluminiumfolie werden jeweils 10 gew-%ige Dispersionen der Polymere aus Beispiel A - E in Isobutanol mit einem 24 µm Handcoater in der Reihenfolge A - E übereinander geschichtet. Dabei wird jede einzelne Polymerschicht nach dem Aufrakeln getrocknet und der Pulverauftrag durch Ziehen der Folie über eine 200°C heiße Oberfläche fixiert. Nachdem das letzte Polymer fixiert wurde, wird die Folie für eine Minute bei 220°C in einem Umlufttrockenschrank getempert. Nach dem Tempern zeigt der Polymerfilm einen silbrig grauen metallischen Effekt. Die Gesamtschichtdicke beträgt 11 µm.
Zur Herstellung des Effektpigments wird die beschichtete Aluminiumfolie in halbkonzentrierte Salzsäure gegeben, wobei sich die Aluminiumträgerfolie auflöst und der Polymerfilm zurückbleibt. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack einen metallischen Effekt.

### Beispiel 5

Auf eine Aluminiumfolie werden jeweils 20 gew-%ige Dispersionen der Polymere aus Beispiel H - I in tert. Butanol/Wasser = 1/1 mit einem 24 µm Handcoater übereinander geschichtet. Dabei wird jede Polymerschicht nach dem Aufrakeln getrocknet und der Pulverauftrag durch Ziehen der Folie über eine 200°C heiße Oberfläche fixiert. Nachdem das zweite Polymer fixiert wurde, wird die Folie für eine Minute bei 220°C in einem Umlufttrockenschrank getempert. Nach dem Tempern zeigt der Polymerfilm einen silbrig grauen metallischen Effekt. Die Gesamtschichtdicke beträgt 10 µm.
Zur Herstellung des Effektpigments wird die beschichtete Aluminiumfolie in halbkonzentrierte Salzsäure gegeben, wobei sich die Aluminiumträgerfolie auflöst und der Polymerfilm zurückbleibt. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack einen metallischen Effekt.

### Beispiel 6

Auf eine Aluminiumfolie werden jeweils 10 gew.-%ige Dispersionen der Polymere aus Beispiel A - E in Isobutanol mit einem 24 µm Handcoater in der Reihenfolge A - E übereinander geschichtet. Dabei wird jede einzelne Polymerschicht nach dem Aufrakeln getrocknet und der Pulverauftrag durch Ziehen der Folie über eine 200°C heiße Oberfläche fixiert. Nachdem das letzte Polymer fixiert wurde, wird die Folie zum Tempern über eine heiße Metalloberläche gezogen. Die Temperatur der Metalloberfläche beträgt 300 °C, die Kontaktzeit der Folie mit der Metalloberfläche ca. 3-10 Sekunden. Nach dem Tempern zeigt der Polymerfilm einen silbrig grauen metallischen Effekt. Die Gesamtschichtdicke beträgt 11 µm.
Zur Herstellung des Effektpigments wird die beschichtete Aluminiumfolie in halbkonzentrierte Salzsäure gegeben, wobei sich die Aluminiumträgerfolie auflöst und der Polymerfilm zurückbleibt. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack einen metallischen Effekt.

### Beispiel 7

Die Coextrusionsanlage besteht aus drei Einschneckenextrudern, an denen Schmelzepumpen angeschlossen sind. Die Schmelzenpumpen gewährleisten einen gleichmäßigen, pulsationsfreien Fluß der Schmelzen. Die Schmelzenströme werden in der Austrittsdüse übereinandergeführt. Der Austrag erfolgt über eine Breitschlitzdüse. Im Extruder 1 wird Polystyrol extrudiert, das in den beiden äußeren Schichten als Trägerschicht dient. Die beiden Flüssigkristallhauptkettenpolymere F und G werden bei 280°C in den Extrudern 2 und 3 extrudiert. Die Schmelzenströme werden im gleichen Volumenverhältnis gefördert. Es wird ein Band mit 20 cm Breite abgezogen. Das Band zeigt eine metallische Farbe. Die Flüssigkristallschicht ist sehr gut ausgebildet und besitzt eine Schichtdicke von 12 bis 15 µm.
Zur Herstellung des Effektpigments mit metallischem Glanz wird das Band in einer Schneidmühle gemahlen. Dabei löst sich das Polystyrol von der Flüssigkristallschicht ab und kann anschließend über die Dichteunterschiede abgetrennt werden. Die Flüssigkristallteilchen werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack einen metallischen Effekt.

## Patentansprüche

1. Flächiges Material aus mindestens zwei unvernetzten, thermoplastischen cholesterischen flüssigkristallinen Hauptkettenpolymeren mit unterschiedlicher Ganghöhe ihrer cholesterischen Helices, oder aus mindestens einem unvernetzten, thermoplastischen cholesterischen flüssigkristallinen Hauptkettenpolymer und einem thermoplastischen, nematischen Polymer, wobei das Material einen senkrecht von der Oberfläche des Materials ausgehenden Mischungsgradienten der Hauptkettenpolymere und eine Reflexion aller Wellenlängen des sichtbaren Spektrums aufweist.

2. Material gemäß Anspruch 1, dadurch gekennzeichnet, daß es eine Schicht auf einem Trägermaterial, ein Laminat, ein Film oder ein Plättchen ist.

3. Material gemäß Anspruch 1 oder 2, dadurch gekennzeichnet, daß an der einen Außenseite des Materials ein cholesterisches flüssigkristallines Hauptkettenpolymer mit selektiver Reflexion im roten oder IR-Spektralbereich und an der anderen Außenseite des Materials ein cholesterisches flüssigkristallines Hauptkettenpolymer mit selektiver Reflexion im blauen oder UV-Spektralbereich angeordnet ist.

4. Material gemäß einem oder mehreren der Ansprüche 1 bis 3, dadurch gekennzeichnet, daß an der einen Außenseite des Materials ein thermoplastisches nematisches Polymer und an der anderen Außenseite des Materials ein cholesterisches flüssigkristallines Hauptkettenpolymer mit selektiver Reflexion im blauen oder UV-Spektralbereich angeordnet ist.

5. Material nach mindestens einem der Ansprüche 1 bis 4, dadurch gekennzeichnet, daß die Hauptkettenpolymere Polyester, Polyamide oder Polyesteramide sind, die aromatische und/oder cycloaliphatische Hydroxycarbonsäuren, aromatische Aminocarbonsäuren; aromatische und/oder cycloaliphatische Dicarbonsäuren, und aromatische und/oder cycloaliphatische Diole und/oder Diamine; sowie chirale, bifunktionelle Comonomere enthalten.

6. Material nach mindestens einem der Ansprüche 1 bis 5, dadurch gekennzeichnet, daß die Hauptkettenpolymere im wesentlichen aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Mol% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine;
d) 0,1 bis 40 Mol%, vorzugsweise 1 bis 25 Mol%, an chiralen, bifunktionellen Comonomeren; wobei die Gesamtsumme 100 Mol% und die Summe der Komponenten a), b) und c) 60 bis 99,9 Mol% ergibt,
bestehen.

7. Material nach Anspruch 6, dadurch gekennzeichnet, daß das chirale, bifunktionelle Monomer Isosorbid, Isomannid, Isoidid, Camphersäure, (D)- oder (L)-Methylpiperazin, (D)- oder (L)-Methyladipinsäure, Butan-2,3-diol sowie 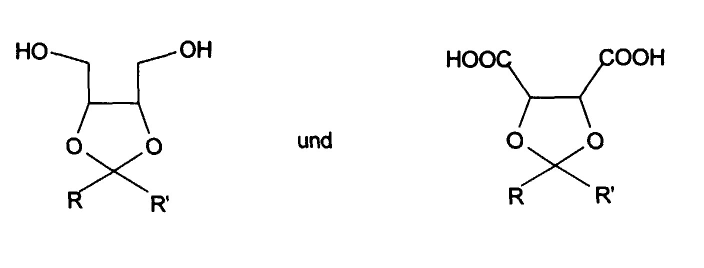 wobei R und R 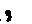 jeweils unabhängig voneinander H, C₁-C₆-Alkyl oder Phenyl, vorzugsweise H oder CH₃, sind, ist.

8. Material nach mindestens einem der Ansprüche 1 bis 7, dadurch gekennzeichnet, daß das Hauptkettenpolymer ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl sowie Camphersäure, Isosorbid oder Isomannid enthält.

9. Verfahren zur Herstellung eines Materials nach einem oder mehreren der Ansprüche 1 bis 8, dadurch gekennzeichnet, daß mindestens zwei thermoplastische cholesterische flüssigkristalline Hauptkettenpolymere mit unterschiedlicher Ganghöhe ihrer cholesterischen Helix, oder mindestens ein thermoplastisches cholesterisches Polymer und ein thermoplastisches nematisches Polymer, auf einem Trägersubstrat übereinandergeschichtet und anschließend getempert werden, bis ein metallischer Effekt sichtbar wird, und der entstandene Polymerfilm gegebenenfalls von dem Trägersubstrat getrennt und gegebenenfalls zu Plättchen verarbeitet wird.

10. Verfahren nach Anspruch 9, dadurch gekennzeichnet, daß mehr als zwei Hauptkettenpolymere mit unterschiedlichen Ganghöhen ihrer cholesterischen Helix so übereinander geschichtet werden, daß sich die Ganghöhe von Polymerschicht zu Polymerschicht entweder erhöht oder erniedrigt.

11. Verwendung eines Materials nach einem oder mehreren der Ansprüche 1 bis 8 als Effektpigment.

12. Verwendung nach Anspruch 11 als Effektpigment für Lackierungen natürlicher und synthetischer Materialien, insbesondere von Karosserien oder Karosserieteilen von Kraftfahrzeugen, oder für Kosmetika.
